(19) Europäisches Patentamt
European Patent Office
Office européen des brevets

(11) Publication number: 0 113 367
B1

(12) EUROPEAN PATENT SPECIFICATION

(45) Date of publication of patent specification: 15.02.89

(51) Int. Cl.$^4$: C 08 G 83/00, C 08 F 292/00, C 09 D 3/80

(21) Application number: 83902102.9

(22) Date of filing: 08.07.83

(86) International application number: PCT/EP83/00189

(87) International publication number: WO 84/00375 02.02.84 Gazette 84/03

# (54) METHOD FOR PRODUCING CROSS-LINKED RESIN COATINGS ON SUBSTRATES.

(30) Priority: 14.07.82 CH 4282/82

(43) Date of publication of application: 18.07.84 Bulletin 84/29

(45) Publication of the grant of the patent: 15.02.89 Bulletin 89/07

(84) Designated Contracting States: AT BE CH DE FR GB LI LU NL SE

(56) References cited:
FR-A-2 260 608
FR-A-2 305 468

(73) Proprietor: BATTELLE DEVELOPMENT CORPORATION
505 King Avenue
Columbus Ohio 43201 (US)

(72) Inventor: BELLMANN, Günter
Chemin de la Dauphine 39
CH-1291 Commugny (CH)
Inventor: NGUYEN, Van, Tao
Copponex
F-74350 Cruseilles (FR)

(74) Representative: Dousse, Blasco et al
7, route de Drize
CH-1227 Carouge/Genève (CH)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 113 367 B1

Courier Press, Leamington Spa, England.

**Description**

The present invention concerns the field of surface coatings, namely varnishes, lacquers, enamels and paints based on organic polymers and resins. It more especially concerns processes for coating substrates, the production of polymer materials employable for coating or as binders in coating compositions and the application of coatings on substrates.

It is known that the fundamental ingredients of compositions for applying on substrates non-transparent coatings in the fluid state (uncured) and curing after application include a binder (one or more copolymerizable monomers and/or prepolymers) and a filler of dispersed solid particles (organic or mineral pigments, diluting fillers or extenders, or others). The object of these particles is mainly to impart to the coating film suitable opacity, color and certain physico-chemical properties (for instance, resistance to abrasion). The object of the binder is to adhere the coating to the substrate, to embed and to bind together the solid particles and also to provide certain properties to the coating, e.g. flexibility, homogeneity, good surface appearance and proper resistance to ageing.

It is generally advantageous in the coating compositions to incorporate to the binders rather large quantities of particulate fillers (to provide more vivid colors, better covering capacity, more economical product, etc.). However, the amount of particulate fillers to be incorporated into binders is limited by the degree of compatibility (wettability) of the particles of the filler with the organic binder. In many cases, the solid particles are organophobic (e.g. $SiO_2$, $Al_2O_3$, $TiO_2$) and do not well disperse into the organic materials monomers, prepolymers, etc.) which are constituents or precursors of the binders. Consequently, it has been sought to make these particles organophilic by grafting on the surface thereof radicals or organic chains compatible with the binders employed and allowing said particles to become "intimate" with said binders.

Thus the present inventors have recently disclosed a composition for making photocurable coatings (see International Patent Application No. WO 82/02403 (=EP—B—0 069 133) comprising, as binder phase, photopolyermizable monomers and, as filler, $SiO_2$ or $Al_2O_3$ particles bearing, grafted thereon, hydrocarbon chains. The presence of such chains allows very large ratios of mineral fillers to be incorporated into the binder without impairing the essential properties of the coatings from said compositions (transparency, flexibility). Moreover, the presence of high levels of mineral fillers in the coatings substantially improves certain properties such as, for instance, the resistance against abrasion.

Document FR—A—2305468 discloses treating a kaolin filler with an alkylamino-alkylamine followed by cross-linking with formaldehyde. This treatment improves compatibility between the filler and an organic phase, for instance rubber, into which the filler is subsequently incorporated.

It has now been further discovered that the intrinsic properties of coatings containing fillers of dispersed particles can be improved when the latter are chemically linked to the resins of the binders. Thus, it has been noted that if some copolymerizable functions grafted to the solid particles of the fillers are made to participate to the polymerization reactions leading to the normal formation of the binder of the coating composition, said particles are incorporated to said binder in the form of a quasi-homogeneous phase which provides particularly favorable physico-chemical properties to said coating. Moreover, it has been noted that the particles of a grafted filler, even the smallest ones, ought to carry each a number of copolymerizable functions generally exceeding 2 and the use of such grafted particles as co-monomers does lead to a significant degree of cross-linking in the organic polymer, such cross-linking being intended to contribute to the modification and enhancement of the properties of the coating. This cross-linking occurs because the copolymerizable graft functions are indeed chemically connected together through the body of the particle.

Hence, in the first place the invention concerns a method for the production of coatings of cross-linked polymerized resins containing a filler and the deposition thereof on substrates. According to this method, it is provided for the intimate dispersion of particles of at least one kind of mineral or organic filler into an organic phase containing one or more copolymerizable monomers and, optionally, other additives such as solvents, stabilizers, polymerization catalysts, antioxidants, fungicides, etc., such particles bearing, grafted on the surface thereof, organic chain-like substituents carrying organic functions capable or copolymerizing with said monomers; then a layer of the resulting dispersion is applied on a substrate and the hardening of this layer is effected by curing and polymerization with means other than light.

By analogy, this method can be applied to the production of homogeneous binder-filler phases employable in coating compositions. In this case, a filler of particles having grafted thereon copolymerizable functions is dispersed in an organic monomeric and/or prepolymeric binder phase and the dispersion is hardened or prehardened (preliminary curing): then the latter is thereafter incorporated as the base ingredient into a coating composition according to usual techniques, i.e. with addition of the ingredients normally added to paints and varnishes such as solvents, curing agents, corrosion inhibitors, antioxidants, detergents, fungicides, etc., and the resulting composition is employed for making coatings under usual practice.

Preferably, the grafted organic groups or chains discussed here have the formula:

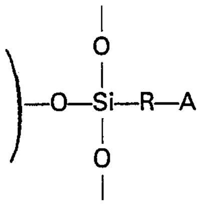

(I)

wherein the curved line schematically represents a portion of the surface of a particle, R is a linking bifunctional aliphatic or cycloaliphatic radical and A represents the said copolymerizable function to be defined later. The valencies represented free on the oxygen atoms can be connected to hydrogen atoms, or to Si atoms of neighboring grafted chains, or to atoms of the particle near the surface thereof, provided that such atoms are bindable, as shown in the formula, to said chain substituent. For illustration purpose, if the particle is made of silica, the free hydroxy groups of the silicon atom of the chain represented in formula I can condense by dehydration with the nearby hydroxylated Si atoms on the particle to give a tridimensional network

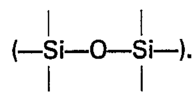

This type of reaction has been detailed in the aforementioned application WO 82/02403.

The nature of the linking group R is rather unrestricted, the latter comprising from 1 to about 20 carbon atoms (this upper range not being limitative), R can be straight chained, branched or cyclic, and it can carry other functions that should not be reactive under conditions when A copolymerizes with copolymerizable monomers and/or prepolymers. For instance, among others, R can carry intermediate functions such as —CO—, —O—, —NR'—, —S—, etc., R' being any hydrocarbon radical.

The function A is a reactive function for participating to the general polymerization reaction scheme leading to the build-up of the coating or of the binder in the coating and its nature is thus related directly to the polymerizable system involved.

For instance, in the case of polyurethane or polyurea resins (obtained from diisocyanates and diols or diamines), A can be a function such as —NCO, —OH, $—NH_2$ or —NRH.

In the case of polyolefins polymerized thermally or catalytically, A can be a function with unsaturated carbons such as the following functions: vinyl, allyl, acrylic, butadienyl, etc.

In the case of epoxy-resins, A can be the functions oxirane, $—NH_2$, —NR'H, —OH, —SH.

With polyesters or alkyd resins, A can be —OH, —COOH, —COCl.

The species for A is therefor selected as a function of the needs, i.e. depending on the sort of resins and particles used, depending on the routes of synthesis for the compounds used for grafting and depending on the commercial availability of the starting materials and end products.

Under usual practice, it is advantageous to carry out the grafting reaction by means of compounds of Formula

$$(HO)_3Si—R—A \qquad (II)$$

wherein the symbols are the same as in Formula I, the linkage by grafting being effected by the dehydration of one or more of the nearby OH functions belonging to the particle with corresponding functions of compound II. The preferred route to procure compound II is mentioned hereinafter.

The kinds of fillers of solid dispersible particles to be used within the scope of this invention are many and include most solid materials known in the field of paints, varnishes, lacquers, inks, enamels and similar products, provided they carry functions with labile hydrogen atoms suitable for being grafted; a preferred example of such functions is the —OH group included in mineral bases, alcohols, phenols or molecules of water of hydration.

As non-limitative examples of fillers, pigments and other particulate mineral fillers, the following can be recited; alumina hydrate, antimony oxide, asbestos, baryum metaborate, basic baryum sulfate, iron oxide, blanc fixe, cadmium sulfide and other cadmium pigments, $CaCO_3$, calcium silicate, calcium plumbate, calcium molybdate, chromium yellow, chromium green, $Cr_2O_3$, cobalt blue, copper chromite, cuprous oxide, $3BaSO_4 \cdot Al(OH)_3$; kaolin, clay, basic lead carbonate, dibasic lead phosphite ($2PbOPbHPO_3 \cdot 0.5H_2O$), basic lead sulfate, lithopone, manganese violet ($H_4NMnP_2O_7$), red and yellow mercuryoxide, mica, molybdate orange ($25PbCrO_4 \cdot 4PbMoO_4 \cdot PbSO_4$), nickel antimonititanate ($NiO \cdot Sb_2O_3 \cdot 20TiO_2$), $SiO_2$ (novaculite, pumice, silica, aerogel, amorphous silica, etc.), sodio-aluminosilicate, talc, $TiO_2$, ultra-marine blue, zinc basic chromate, zinc ferrite, ZnO, zinc basic molybdate, zinc phosphate, zinc yellow ($4ZnO \cdot K_2O \cdot 4CrO_3 \cdot 3H_2O$), $SnO_2$ most metals in finely divided form.

As organic pigments, the following non-limitative examples can be recited: nickel yellow azo, rouge para, red pigment 6, lithol red, manganese red BON, alizarines, orange 2, azobordeaux.

In addition to the above particulate fillers, the invention also applies to fibrous fillers such as glass or

ceramic fibers. Other examples of fillers are found in the following references: "Pigment Handbook", T. C. Patton, Wyley-Intersc. Publ. (1973).

Of course, grafting cannot be done directly on surfaces which are non-reactive toward the —$Si(OH)_3$ group, for instance carbon black surfaces; in this case, hydrophilic chains must first be grafted on the particles of carbon black (this technique is disclosed in Patent Application EP 82 810 295.4).

To effect grafting leading to particles carrying chain substituents like in formula I, the following can advantageously be carried out: a trialkoxysilane or a trihalogenosilane is treated in aqueous medium for hydrolyzing it into a corresponding trihydroxysilane. Then the filler of particles to be grafted is added to the hydrolysis medium and the mixture is agitated during a time sufficient for bonding by condensation most of the trihydroxysilane molecules on the surface of the particles. Then, the liquid is separated by usual means from the grafted filler (evaporation of the solvent, filtration, centrifugation), and the latter is dried, for instance under vacuum at 50—150°C. Alternatively, separation and drying can be effected simultaneously, for instance by subjecting the organic or aqueous dispersion of the grafted filler to spray-drying.

Hydrolysis can be effected, depending on the case, in acidic or alkaline medium. An alkaline medium is convenient for silanes carrying a —$NH_2$ function; an acid medium, for instance at pH controlled between 3 and 5, is convenient for other silanes to minimize possible self-condensation into polysiloxanes. When A is an epoxy function, hydrolysis is preferably brought about under neutral conditions. In case where the copolymerizable function is sensitive to water (for instance a —NCO group) grafting can also be effected in anhydrous medium (dioxane, toluene, xylene or DMF) by employing a trialkoxysilane not previously hydrolyzed. After grafting, the grafted filler is then directly usable for the preparation of the coating compositions as previously stated.

Among the trialkoxysilanes which are hydrolyzable into corresponding compounds II or which are usable directly as mentioned above, the following compounds can be recited:

vinyl-triethoxysilane, $CH_2=CHSi(OC_2H_3)_3$;
vinyl-trimethoxysilane, $CH_2=CHSi(OCH_3)_3$;
vinyl-tri(β-methoxyethoxy)silane, $CH_2=CHSi(OC_2H_4OCH_3)_3$;
2-(trimethoxysilyl)ethyl methacrylate, $(CH_3O)_3SiC_2H_4OOCC(CH_3)=CH_2$;
3-(triethoxysilyl)propyl methacrylate, $(C_2H_5O)_3SiC_3H_4OOCC(CH_3)=CH_2$;
4-(trichlorosilyl)butyl acrylate;
6-(tricyclohexyloxysilyl)hexyl methacrylate;
11-(trimethoxysilyl)undecyl methacrylate;
18-(triethoxysilyl)octadecyl acrylate;
p-[3-trimethoxysilylpropyl]-styrene;
glycidoxypropyl-trimethoxysilane;
trimethoxysilylethyl-3,4-epoxycyclohexane;
N-triethoxysilylpropyl-amine;
N-trimethoxysilylpropyl-N(β-aminoethyl)amine;
N-trimethoxysilylundecyl-amine;
3-isocyanatopropyl-trimethoxysilane;
β-hydroxyethyl-triethoxysilane;
γ-mercaptopropyl-trimethoxysilane.

A more complete list of silane compounds usable in the invention is found in USP 4,026,826 cited as a reference. It will be noted that it has been already disclosed (see USP 3,419,517) that fillers such as $Al_2O_3$, quartz, silicagel, carbon black, graphite, metal powders, $CaCO_3$, etc. can be treated with silane derivatives such as the aforementioned kinds; then the fillers thus treated are incorporated into resins (for instance, polyamides) as reinforcing agents. When this incorporation is carried out (see col. 12 and 13 of the above cited reference), the reactive groups of the silane compounds are capable of reacting with the formed polymer chains and providing chemical bonds therewith. It does not appear to be suggested however in the reference that such reactive groups can copolymerize with the reacting monomers as in the present invention. Moreover, there are neither suggestions that polymers so reinforced can be used as coatings on substrates. On this kind of subject, the following references: USP 3,328,339; 3,324,074; 3,328,231, GB 1,110,930; 1,146,085 and NL 69/01148 can be cited.

Among the resins used generally in the field of industrial coatings whose monomers and/or prepolymers constituents are suitable in the invention, the following products can be proposed as examples: alkyd resins; mixed phenoplast-alkyd resins; alkyd-chlorinated rubber; alkyd-polystyrene; alkyd-diisocyanate; alkyd-vinyl-epoxy; alkyd-aminoplast; alkyd-silicone; epoxy-aminoplast resins; vinyl-phenolacetal; epoxy-phenoplast; polyesters; polyamides; polyurethanes; polyvinyl acetals; polyester-styrene; epoxy-polyamide; melamine-formaldehyde; phenolformaldehyde, etc.

The monomers usable within the scope of the present invention comprise most of the compounds which are suitable for the production, by polymerization and copolymerization, of resins applicable for coating surfaces or as binders in coating compositions. Detailed lists of such monomers are available from publications devoted to the field, e.g. Encyclopedia of Polymer Science & Technology.

For instance, some of the most commonly used monomers suitable in the field of polyamides, polyesters, polyethers, epoxides, polyimides, polyurethanes, etc. are listed below:

Diacids; carbon dioxide, oxalic, glutaric, adipic, pimelic, suberic, azelaic, sebacic, maleic, phthalic, terephthalic, isophthalic acids and the like.

Diamines: ethylenediamine, hexamethylenediamine, hydrazine, piperazine, and the like.

Alcohols and phenols: ethylene glycol, di- and triethylene-glycol, polyalkylene-glycols, polyethyleneglycol, polypropylene-glycol, neopentyl-glycol, 1,4-butanediol, cyclohexanedimethanol, bisphenol-A, trimethylolpropane and the like.

Diisocyanates: 2,4- and 2,6-toluene-diisocyanate, diphenylmethane-4,4'-diisocyanate, cyclohexane-diisocyanate, p-phenylenediisocyanate, hexamethylene-diisocyanate, and the like.

Other examples of monomers and prepolymers convenient for the invention are to be found in the book: "Encyclopedia of Polymer Science & Technology", Wyley & Sons (1972) and also, particularly in regard to olefinic monomers and prepolymers, in International Application No. WO 82/02403 and in the aforementioned US Patents listed as references.

From the foregoing description, it is seen that the composition of matter usable according to the invention mainly consists, in the first place, of one or more polymerizable monomers and/or copolymers and in the second place of a filler of particles bearing, grafted on the surface thereof, organic substituent chains provided with functions that can copolymerize with the monomers. In addition, the composition can comprise other ingredients commonly used in coatings, such as polymerization catalysts, adhesion promoters, bactericides, fungicides, additional inert fillers, possible solvents, antioxidants, etc.

In general, the composition is prepared just before use to avoid hardening during storage. This precaution is however not necessary in the cases where curing is only induced by heat. Hence, depending on the cases and on the kind of polymeric resins used, the manner in which the components of the composition are used and are presented for sale may be subject to modifications. For instance, in the case of polyurethane resins, a product can be commercially offered which consists of, on one hand, a polyol component containing a filler with particles grafted with chain segments carrying hydroxy or amine functions and, on the other hand, a polyisocyanate component (the possible further additives belonging to one or the other component). Both components are mixed just before use and the resulting composition is used for coating substrates e.g. bodies of vehicles, construction panels, miscellaneous articles and others. Curing of the coating takes place either spontaneously at ordinary temperature, or it can be accelerated by heat and moisture. Naturally, it is also possible to offer a similar product using a reversed arrangement, i.e. a polyisocyanate component containing the filler particles grafted with isocyanato-alkylsilanes and a filler-free polyol component. Analogous techniques are suitable in the cases of systems involving other resins, e.g. alkyd, polyesters, polyamides, epoxy, etc. In the case of polyolefins polymerization is generally induced by heat or by the effect of catalysts or both. A list of suitable catalysts is given in GB 1,146,085 page 9. In this case, it is preferable to firstly mix the filler (the particles of which bear, grafted thereon, unsaturated chain segments) with the unsaturated monomers of the composition (ingredient a) and to add the catalyst or curing agent (ingredient b) just before use. Optional further additives may be incorporated in one or the other of ingredients a and b.

With regard to the relative proportions of the ingredients included in the present composition, the following data can be provided.

When effecting the grafting operation on the particles of the filler with trihydroxysilane compounds, grafting levels in the order of 0.1 to 50% by weight are possible, preferably 10 to 40%. It should be clear that the high values of this range refer to fillers with large area per weight (for instance like with pyrogenic silicas where the specific surface figure is in the order of 50—400 $m^2/g$), whereas the low values of this range refer to low specific surface particles (e.g. $TiO_2$ with about 10 $m^2/g$; blanc fixe with about 4 $m^2/g$, chromium orange about 1.3 $m^2/g$). For examplification, the following data can be provided: for instance, Aerosil-200 (a pyrogenic silica) is in the form of particles of about 10 nm size (surface$\approx 3\times10^{-16}m^2$) on each of which one can attach (graft) about 1000 to 2000 siloxane functions (about $300—600\times10^{16}$ substituents/$m^2$; $0.5—1\times10^{-5}$ mole/$m^2$. Since the specific surface of this silica is 200 $m^2/g$, a grafting density corresponding to the high value of the aforementioned range comes approximately, by weight, to the range of 0.1—2 parts of a siloxane (such as trihydroxyaminopropylsilane or other hydroxysilanes or corresponding alkoxysilanes) for one part of filler. It is noted that the degree of homogeneity of the binder-filler phase is a function of the grafting level as well as are other properties such as shock and abrasion resistance, resistance to corrosion; flexibility, etc. for a given filler/binder ratio. It is also evident that the technique resulting from the present invention provides more significant comparative results at high filler levels and with particles with high values of specific surfaces than at low filler levels. The percent by weight of grafted filler incorporated into the organic phase of the present compositions ranges from about 10 to 52%.

In conclusion, the present invention permits, in view of the possibility of increasing the filler density in the binder of coatings and of improving the affinity of the fillers toward the organic phase, to attain the following objectives: to provide coating compositions with high ratios of mineral fillers to organic components with still acceptable viscosity; to improve the adhesion of coatings on substrates and their resistance to scratching, cracking and ageing. To improve the modulus and flexibility of coatings while decreasing their permeability to moisture and porosity. To improve the resistance to wear and tear, to abrasion and to weathering agents. This property is particularly valuable for coated structures exposed to general out-door conditions or to sea-water.

The trialkoxysilanes having substituents in the silane chain capable of copolymerizing the monomers for providing binder phases suitable in the present coatings can be obtained by several methods known by people skilled in the art and taught in the technical literature. Also, many of the trialkoxysilanes usable in the invention are commercially available (e.g. from the Union Carbide Company). Other general information on these compounds is found in the publication; "Silicone Technology", Applied Polymer Symposia, No. 14, P. F. Bruins, Interscience Publ. (1970).

The following examples illustrate the invention.

Example 1

Twelve g (2 parts of trimethoxy-n-propanol-silane methacrylate (γ-methacryloxy-propyl-trimethoxy-silane) were added to 300 ml of water acifified at pH 3.6 with acetic acid. After agitating for 20 min at room temperature, 30 g (5 parts) of silica (Aerosil-380, Degussa) were added under violent stirring; the solvent was removed by evaporation and the filler was dried overnight at 110°C/15 Torr. A first lot (A) of grafted silica was thus obtained in 92% yield.

The above preparation was repeated using 12 g of trimethoxy-3-aminopropyl-silane as the organosilane compound, the same type of silica (but 48 g in place of 30 g) and a water medium at pH 9 (NaOH). A second lot (B) of grafted silica was thus obtained in 95% yield.

For testing lots A and B of grafted silica, a two components polyurethane resin (type Verilac, Pont d'Ain, France) was used, this material comprising a polyol component (OU-53-300) and a polyisocyanate hardener component (DU-436). The polyol component is a 1:1 mixture of a monomer and an inert solvent (50 parts by weight of a solid with 50 parts by weight of a solvent). To this, one adds 50 parts by weight of the hardener. The application is done by spraying (if dilution is necessary, one uses butyl acetate).

For the tests, 80 g of the polyol component were used to which were added 16 g of grafted silica (lot A or B). The components were mixed for 2 hrs on a planatary milling device (a device in which the jars also containing milling balls are simultaneously spun and rotated in a circular fashion), then to 96 g of the dispersion thus obtained were added 40 g of hardener. Coating compositions, respectively A and B, were thus obtained.

Coatings with the compositions of thickness about 50—100 μ were applied on square polished steel plates of about 10 cm on the side and allowed to harden for 1 hr at 60°C. A control sample (C) was prepared identically but using no filler in the composition.

The coating samples were subjected to the TABER (ASTM) abrasion test described in the international application No. WO 82/02403. The results after 500 and 1000 abrasion cycles are listed in Table I below and given in terms of mg of coating lost during test.

TABLE I

| Sample | % of silica | Results (mg) 500 C | Results (mg) 1000 C |
|---|---|---|---|
| A | 20 | 8.7 | 25.2 |
| B | 20 | 6.8 | 15.3 |
| C | — | 7.1 | 23.0 |

The results show that the wear rate of sample B is significantly less than that of the control (no silica) and that of sample A (containing silica grafted with groups which do not co-polymerize with the monomers of the resin used in the coating). This example shows that even if the incorporation of a mineral filler in a hydrophobic resin is facilitated by using particles bearing organophilic groups, marked improvement in the physical properties of the coatings are observed only in the case where said organophilic groups can also co-polymerize with the resin monomers and become intrinsically bound to the coating matrix.

Example 2

The same general procedure as for Example 1 was used with the following reagents: Silica: AEROSIL-380 30 g; Siloxane; γ-glycidyloxypropyl-trimethoxysilane 12 g; pH of hydrolysis: 3.6.

This grafted silica was incorporated intohthe first component (1, epoxy component) of an epoxy-resin labelled SUPER JALTONIT (manufacturer: JALLUT, Switzerland) at a level of 10 g of silica for 40 g of (1), i.e. 20 g of a monomer plus 20 g of a solvent. Then 40 g of a second component (2, amine hardener) was added to the mixture (50 g) of silica and the first component. After thorough mixing, the composition was applied on a steel plate as an approximately 50 μ layer (sample E) which was allowed to harden for 1 hr at 80°C. Another sample (D) was prepared identically but for the use of silica grafted with 3-methacryloxy-propyl-trihydroxysilane already used in the case of sample A in Example 1. Moreover, a control sample (F) was also prepared with no silica.

The samples were subjected to the TABER test like in Example 1 and the results are listed in Table II.

TABLE II

| Sample | % of silica | Results (2000 C) (mg) |
|---|---|---|
| D | 20 | 21 |
| E | 20 | 17 |
| F | — | 27 |

The most favorable results are again obtained when using as the filler a silica bearing, grafted on the particles, groups which are copolymerizable with the monomer of the resin.

When using a filler of silica having grafted thereon an amine carrying chain (the silica used in lot B of Example 1) and incorporating this filler to the hardener (2) of the present epoxy resin, results obtained from a coating made with this composition were quite comparable to that from sample E above.

Example 3

The materials used in the following Example are defined below:

Fillers: $SiO_2$ (Aerosil-380 from DEGUSSA; surface area 390±30 $m^2/g$; average particle size 7 nm)

$Al_2O_3$ (Aluminum oxide-C from DEGUSSA; 100±15 $m^2/g$; 20 nm)

$TiO_2$ (Titanium dioxide P-25 from DEGUSSA; 50±15 $m^2/g$; 30 nm)

Grafting compounds: γ-MPS (γ-methacryloxypropyl-trimethoxysilane; ingredient A-174 from UNION CARBIDE)

γ-EPS(γ-epoxypropyl-trimethoxysilane; ingredient A-187 from UNION CARBIDE)

γ-APS (γ-aminopropyl-trimethoxysilane; A-1100 from UNION CARBIDE)

Preparation of the corresponding trihydroxysilanes:

The hydrolysis of the trialkoxysilanes was performed at 25°C in a stirred 1 liter reactor containing 500 ml of hydrolyzing aqueous medium (water+required amount of acid or base to adjust pH) and to which was added such a quantity of trialkoxysilane to obtain after hydrolysis a 2.5% by weight concentration of the trihydroxysilane in the medium of hydrolysis. The pH and reaction time were as follows: γ-MPS, 3.5, 40 min; γ-EPS, 6, 40 min; γ-APS, 11, 3 hrs.

Grafting of the fillers:

Grafting was effected by adding 50 g of the mineral fillers to the above 500 ml of aqueous medium containing the trihydroxysilane and homogeneizing in a "PRESTO MILL" homogenizer for 10 min. The weight ratio of grafting reactant to filler was 12.5/50=1/4. The isolation of the grafted filler was carried out by spray-drying in hot air (160°) with a "MINI SPRAY HO" apparatus. Flow rate 600 ml/min; temperature of the spray enclosure 83—86°C.

For testing the effect of incorporating the grafted fillers into organic coating compositions, the following lacquer bases were selected:

1. ASEOL M-71, a two component unsaturated polyester type resin for home appliances obtained from ASEOL A.G., 3001 Bern, Switzerland. For preparing the coating composition, the manufacturer recommends to mix 4 parts of hardener (MERK-P-20, component B) with 100 parts of unpolymerized resin (component A). Curing conditions, 3 hrs, 80°C. Solvent acetone. Operations under nitrogen.

2. SUPER JALTONIT, a two component lacquer base epoxy-resin for floor or furniture coverings obtained from JALLUT SA, CH 1030 Bussigny, Lausanne, Recommendations for preparing the coating compositions: 1 part of component (A) for 1 part of component (B); curing for 48 hrs at room temperature. Thinner: JALLUT THINNER.

3. POLYURETHANE 53300, a two component polyurethane base resin for the automotive industry from VERILAC CO, F-01 Pont d'Ain, France. The coating composition is prepared by mixing 100 parts of the main component A with 50 parts of hardener (DU-436, component B) and 0 to 5 parts of thinner (D-4064). Baking: 1 hr at 60°C.

Incorporation of the graft fillers into coating composition:

For incorporating the graft filler into the test resin compositions, a calculated amount of filler was selected and mixed with component A (the main component of the composition) for 4 hrs at room temperature in a microball mill (size of beads 1.5—2 mm), when calculating the amount of filler, account was taken of the second component of the resin to be subsequently added (see Table III). When, the dispersion was homogeneous enough and the filler particles reduced by grinding to a size of about 1—3 μ as determined with a ERICHSEN-GAUGE, it was filtered on a 15 μ sieve and the beads were washed with a little solvent. The viscosity of the dispersion was measured with a viscometer RHEOMAT-15, EPPRECHT-CONTRAVES AG, Switzerland.

The results are listed in Table III below. In Table III, the following data are also provided, the type of filler used, the grafting components (none indicates controls), the type of resin, the percent by weight of

grafted filler incorporated relative to total weight of resin and grafted filler and the total percent by weight of solids (resin+mineral particles) in the dispersion (when this percent is not 100, it indicates that component (A) already contained solvent; also the presence of solvent may result from the washing of the beads at the filtration stage).

TABLE III

| Exp. No. | Type of filler | Grafting silane | Test resin (No) | Filler in test resin (% b.w.) | Total solids in dispersion (% b.w.) | Viscosity of dispersion (cP) |
|---|---|---|---|---|---|---|
| 1 | SiO | γ-MPS | 1. | .2 | 64.4 | 160 |
| 2 | TiO | " | " | .34 | 64.4 | 110 |
| 3 | Al O | " | " | .2 | 48.1 | 45 |
| 4 | SiO | γ-EPS | 2. | .33 | 48.9 | 40 |
| 5 | TiO | " | " | .52 | 68.0 | 65 |
| 6 | Al O | " | " | .33 | 49.3 | 35 |
| 7 | SiO | γ-APS | 3. | .33 | 46.5 | 250 |
| 8 | TiO | " | | .47 | 47.8 | 200 |
| 9 | Al O | " | | .33 | 41.2 | 20 |
| 10 | SiO | none | 2. | .33 | 15.8 | Thixotrop. |
| 11 | TiO | " | | .52 | 45. | " |
| 12 | Al O | " | | .33 | 15.8 | " |
| 13 | none | | 1 | 0 | 100. | 1000 |
| 14 | none | | 2 | 0 | 50. | 98 |
| 15 | none | | 3 | 0 | 50.6 | 120 |

The above results show that, due to the grafting of organocompatible groups on the filler particles, it was possible to add relatively large proportions of fillers or pigments ($TiO_2$) to the resins without experiencing unusually high viscosity compared to the unloaded resins. In the absence of such grafted organic groups, the fillers imparted thixotropic properties to the resins. Regarding applications in the paint and lacquer industry, it was noted that the samples containing the $TiO_2$ white pigment had an opacity and covering capacity much superior to that of comparable commercial paints containing the same pigment whether applied by spraying or coating by hand.

Testing of the cured films

The dispersion obtained after homogeneously dispersing the graft fillers in component A of the resin compositions (see properties recorded in Table III) were completed according to manufacturer's specifications by adding component B and mixing vigorously with a stirrer. In doing so the composition acquired a concentration by weight of mineral filler relative to the organic remainder of the composition of 20% in the case of the $SiO_2$ and $Al_2O_3$ fillers and 34% in case of the $TiO_2$. The compositions were spread into films by applying on 10×10 cm iron plates with a hand coater. The films were cured according to the manufacturer's directions (see previous sections) and subjected to the TABER abrasion test in a TABER Abrader, Model 505. Details on the test are given in PCT/EP82/00004. To accelerate the test, the rotating wheels were loaded with 1 kg each instead of 0.5 kg as usual.

The results in Table IV below show the weight loss (mg) after a given number of cycles. The sign "d" indicates a destruction of the film under test.

TABLE IV

| Exp. No. | Kind of resin | Kind of filler | Loss after No of cycles | | | | | | | |
|---|---|---|---|---|---|---|---|---|---|---|
| | | | 25 | 50 | 100 | 150 | 200 | 400 | 600 | 1000 |
| 1 | 1. | none | — | 10.6 | 18.7 | 24.8 | d | | | |
| 2 | " | SiO | — | 6.1 | 14.1 | d | | | | |
| 3 | " | Al O | 4 | 9.5 | d | | | | | |
| 4 | " | TiO | 3.9 | 10 | 16 | d | | | | |
| 5 | 2. | none | — | — | — | — | 5.1 | 10.6 | — | 28.7 |
| 6 | | SiO | — | — | — | — | 4 | 9.3 | — | 24.3 |
| 7 | 3. | none | — | — | — | — | 9.5 | 16.1 | 23.2 | 33.3 |
| 8 | | SiO | — | — | — | — | 5.8 | 12.6 | 17.1 | 24.1 |
| 9 | | Al O | — | — | — | — | 5.6 | d | | |
| 10 | | TiO | — | — | — | — | 8.8 | d | | |

The above results show that in several instances the incorporation of the grafted filler brought out significant improvements to the properties of the films.

Example 4

As the filler, $TiO_2$ was selected and was reacted with γ-EPS in the same conditions and with the same proportions as in Example 3.

Then a quantity of the grafted $TiO_2$ was added to an amount of SUPER JALTONIT Resin base under the condition of the previous Example to provide a weight ratio of $TiO_2$ to $TiO_2$ plus resin defined in Table V below. Two control samples incorporating ungrafted $TiO_2$ were prepared under the same conditions. Before applying the resulting compositions, solvent (JALLUP THINNER) was added to provide a viscosity of 47 cP in all three samples. The percent of solvent used is calculable by subtracting from 100 the values in percent by weight of $TiO_2$+resin given also in Table V. The diluted compositions were applied as thin films (100 μ wet) with a hand coater (P.E.L., Research Equipment, CO, London) on a sheet of black polyethylene film (loaded with carbon black) whose diffuse reflection density is 1.92. Then the films were cured while solvent evaporated according to manufacturer's recommendations for the resin, and the percent reflectance was measured with a MACBETH Quanta Log Densitometer. The results are shown in Table V. These results show that the quantity of $TiO_2$ which could be added to the resin to obtain the same viscosity was much greater when using grafted $TiO_2$ than with ungrafted $TiO_2$. The consequences were that the optical quality (covering power, external aspect) of the coatings were drastically improved over that containing ungrafted $TiO_2$.

TABLE V

| Composition | | | Cured coating | | |
|---|---|---|---|---|---|
| Sample of TiO | Ratio of TiO over TiO +resin | Total solids TiO+polymer (% by w.) | External aspect | Reflectance (%) | Diffuse reflection density |
| Grafted | 0.518 | 57.5 | shiny | 52 | 0.28 |
| Ungrafted (control) | 0.518 | 34.5 | dull | 35 | 0.45 |
| Ungrafted (control) | 0.416 | 36.5 | dull | 20 | 0.72 |

It was also shown that the dispersion of graft filler was stable with time while the dispersion of ungraft filler settled after 48 hrs.

## Claims

1. A method for the production of coatings of cross-linked polymerized resins containing a filler of dispersed particles and the deposition thereof on substrates, characterized in intimately dispersing, in an organic phase containing one or more non-photopolymerizable copolymerizable monomers and, optionally, other additives such as stabilizers, polymerization catalysts, antioxidants and fungicides, a filler of at least one kind of solid mineral or organic particles provided with organic groups grafted on the surface thereof, such groups carrying functions copolymerizable with said monomers, applying a layer of this dispersion on a substrate and effecting curing by copolymerization of this layer by means other than light.

2. The method of claim 1, characterized in that the organic groups are covalently grafted hydroxysilane radicals.

3. The method of claim 2, characterized in that the grafted organic groups have the formula

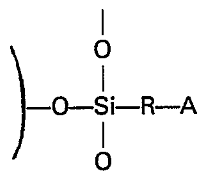

in which the curved line schematically represents a portion of the surface of a particle, R is a linking bifunctional aliphatic or cycloaliphatic radical and A represents the said copolymerizable function selected from —NCO, —OH, —$NH_2$, —NHR', R' being a hydrocarbon substituent, —SH, —COOH and —COCl.

4. The method of claim 1, characterized in effecting said intimate dispersion by milling together at room temperature the grafted filler and at least part of said one or more copolymerizable monomers in a ball mill using glass beads of diameter ranging about 1.5—2 mm.

5. The method of claim 1, characterized in that the monomers are selected from monomers providing, after copolymerization with said corresponding copolymerizable functions grafted on said solid particles, the following resins: alkyds, polyesters, polyurethanes, polyamides, epoxy, vinyl, acrylic, phenolformaldehyde, melamin and the mixed resins corresponding to mixtures of the above materials.

6. The method of claim 1, characterized in that the fillers are selected from silicas, aluminas and $TiO_2$ pigments.

7. The method of claim 1, characterized in that the grafted groups are covalently bound to the particles and are derived from corresponding hydroxy- or alkoxysilanes, the grafted bond resulting from a condensation with functions carrying labile hydrogen on the surface of the particles.

8. The method of claim 1, characterized in that the solid particles of the filler each carry a number of copolymerizable functions exceeding 2, the copolymerization of such functions effectively connected together through the body of said particles bringing about some degree of cross-linking to the polymer.

9. The method of claim 8, characterized in that the density of grafted groups on said particles corresponds to about $3—6\times10^{18}$ copolymerizable function carrying groups per square meter of the particle external surface area.

10. The method of claim 8, characterized in that the weight ratio of grafted organic substituents to mineral filler is around 1:10 to 2:1.

11. The method of claim 1, characterized in that the weight percent ratio of said grafted filler to said organic phase is from 10 to 52%.

## Patentansprüche

1. Verfahren zur Herstellung von Überzügen aus quervernetzten, polymerisierten Harzen mit einem Füllmittel aus dispergierten Teilchen und deren Ablagerung auf Substraten, dadurch gekennzeichnet, daß in einer organischen Phase mit einem oder mehreren, nicht fotopolymerisierbaren, copolymerisierbaren Monomeren und gegebenenfalls anderen Zusätzen, wie Stabilisatoren, Polymerisationskatalysatoren, Antioxidanzien und Fungizide, ein Füllmittel von wenigstens einer Art fester, mineralischer oder organischer Teilchen gut dispergiert sind, die mit auf der Oberfläche aufgepfropften, organischen Gruppen, wie Gruppen, die mit den Monomeren copolymerisierbare Funktionen tragen, versehen sind, daß eine Schicht dieser Dispersion auf einem Substrat abgelegt wird und daß ein Härten durch Copolymerisation dieser Schicht mit Mitteln außer Licht durchgeführt wird.

2. Verfahren nach Anspruch 1, dadurch gekennzeichnet, daß die organischen Gruppen kovalent aufgepropfte Hydroxisilanradikale sind.

3. Verfahren nach Anspruch 2, dadurch gekennzeichnet, daß die gepfropften organischen Gruppen die Formel

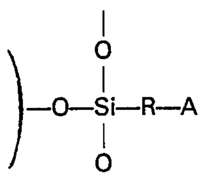

haben, in der die gekrümmte Linie schematisch einen Teil der Oberfläche eines Teilchens darstellt, R ein verbindendes, bifunktionelles, aliphatisches oder cycloaliphatisches Radikal ist und A die copolymerisierbare Funktion aus —NCO, —OH, —$NH_2$, —NHR', wobei R' ein Kohlenwasserstoffsubstituent ist, —SH, —COOH und —COCl darstellt.

4. Verfahren nach Anspruch 1, dadurch gekennzeichnet, daß beim innigen Dispergieren durch gemeinsame Vermahlung bei Raumtemperatur das gepfropfte Füllmittel und wenigstens ein Teil eines oder mehrerer copolymerisierbarer Monomere in einer Kugelmühle mit Glaskugeln eines Durchmesser zwischen 1,5 und 2 mm erfolgt.

5. Verfahren nach Anspruch 1, dadurch gekennzeichnet, daß die Monomere aus den Monomeren ausgewählt werden, die nach der Copolymerisation mit den entsprechenden copolymerisierbaren, auf die festen Teilchen aufgepfropften Funktionen die folgenden Harze geben: Alkyle, Polyester, Polyurethane, Polyamide, Epoxi, Vinyl, Acryl, Phenolformaldehyd, Melamin und die vermischten Harze entsprechend den Mischungen der erwähnten Materiale.

6. Verfahren nach Anspruch 1, dadurch gekennzeichnet, daß die Füllmittel aus den Siliziumoxiden, Aluminiumoxiden und $TiO_2$-Pigmenten ausgewählt werden.

7. Verfahren nach Anspruch 1, dadurch gekennzeichnet, daß die aufgepfropften Gruppen kovalent mit den Teilchen gebunden sind und von entsprechenden Hydroxi- oder Alkoxisilanen abgeleitet sind, wobei die Pfropfbindung sich aus einer Kondensation mit labilem Wasserstoff tragenden Funktionen auf der Oberfläche der Teilchen gegeben ist.

8. Verfahren nach Anspruch 1, dadurch gekennzeichnet, daß die festen Teilchen der Füllstoffe jeweils eine Reihe von copolymerisierbaren Funktionen größer als 2 tragen, wobei die Copolymerisation derartiger Funktionen wirksam durch den Körper dieser Teilchen verbunden ist, wobei sich ein gewisser Grad der Quervernetzung des Polymers ergibt.

9. Verfahren nach Anspruch 8, dadurch gekennzeichnet, daß die Dichte der gepfropften Gruppen auf den Teilchen etwa $3-6\times10^{18}$ copolymerisierbare Funktion tragenden Gruppen pro $m^2$ Außenfläche des Teilchens entspricht.

10. Verfahren nach Anspruch 8, dadurch gekennzeichnet, daß das Gewichtsverhältnis der gepfropften, organischen Substituenten zum Mineralfüllmittel etwa 1:10 bis 2:1 ist.

11. Verfahren nach Anspruch 1, dadurch gekennzeichnet, daß das Gewichtsprozentverhältnis des gepfropften Füllmittels zur organischen Phase von 10 bis 52% ist.

**Revendications**

1. Procédé pour réaliser des revêtements polymères réticulés contenant une charge de particules en dispersion et leur application par dépôt sur des substrats, caractérisé en ce qu'on disperse intimement, dans une phase organique constituée d'un ou plusieurs monomères copolymérisables par des moyens autres que la photopolymérisation et, facultativement, d'autres additifs tels que stabilisateurs, catalyseurs de polymérisation, antioxydants et fongicides, une charge constituée par au moins une variété de particules solides minérales ou organiques munies, sur leur surface, de groupes organiques greffés, ces groupes portant des fonctions copolymérisables avec lesdits monomères, on applique une couche de cette dispersion sur un substrat et on effectue le durcissement par copolymérisation de cette couche grâce à des moyens autres que l'irradiation par la lumière.

2. Procédé suivant la revendication 1, caractérisé en ce que les groupes organiques sont des radicaux hydroxysilane greffés de manière covalente.

3. Procédé suivant la revendication 2, caractérisé en ce que les radicaux organiques greffés ont la formule suivante:

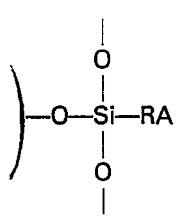

dans laquelle la courbe représente schématiquement une portion de surface de la particule, R est un radical aliphatique ou cycloaliphatique bifonctionnel de liaison et A représente ladite fonction copolymérisable choisie parmi —NCO, —OH, —$NH_2$, —NHR', R' étant un substituant hydrocarboné, —SH, —COOH, —COCl.

4. Procédé suivant la revendication 1, caractérisé en ce qu'on effectue ladite dispersion intime en broyant à température ambiante la charge greffée avec au moins une portion du ou des monomères copolymérisables, dans un moulin à billes, celles-ci en verre ayant un diamètre d'environ 1.5 à 2 mm.

5. Procédé suivant la revendication 1, caractérisé en ce qu'on choisit les monomères parmi ceux qui fournissent, après leur copolymérisation avec lesdites fonctions copolymérisables greffées sur lesdites particules solides, les résines suivantes: alkydes, polyesters, polyuréthannes, polyamides, epoxy, vinyle, acryliques, phénol-formaldéhyde, mélanine, et les résines mixtes résultant des mélanges des matières précitées.

6. Procédé suivant la revendication 1, caractérisé en ce que les charges sont choisies parmi les pigments de silice, d'alumine et de $TiO_2$.

7. Procédé suivant la revendication 1, caractérisé en ce que les groupes greffés sont liés de façon covalente aux particules et proviennent des hydroxy- ou alkoxysilanes correspondants, la liaison de greffage résultant d'une condensation avec des fonctions à hydrogène mobile présentes à la surface des particules.

8. Procédé suivant la revendication 1, caractérisé en ce que les particules solides de la charge comportent chacune au moins deux fonctions copolymérisables, la copolymérisation de ces fonctions laquelle tend effectivement à relier celles-ci entre elles par l'entremise de la masse desdites particules, conduisant à la création d'un certain degré de réticulation du polymère.

9. Procédé suivant la revendication 8, caractérisé en ce que la densité des groupes greffés porteurs de fonctions copolymérisables sur les particules correspond à environ $3—6\times10^{18}$ groupes/$m^2$ de la surface externe des particules.

10. Procédé suivant la revendication 8, caractérisé en ce que le rapport pondéral des substituants organiques greffés à la charge minérale est d'environ 1:10 à 2:1.

11. Procédé suivant la revendication 1, caractérisé en ce que le rapport en pourcent pondéral de ladite charge greffée à ladite phase organique est de 10 à 52%.